# FASCICULE DE BREVET EUROPEEN

(11) **EP 1 062 185 B1**
(45) Date de publication et mention de la délivrance du brevet: **05.12.2001**
(21) Numéro de dépôt: 99909022.8
(22) Date de dépôt: 17.03.1999
(51) Int. Cl.: C04B 35/622, B01D 63/06

(54) **FIBRE CERAMIQUE POREUSE MULTI-CANAL**
PORÖSE KERAMISCHE MULTIKANAL-FIBER
MULTICHANNEL POROUS CERAMIC FIBRE

(30) Priorité: 20.03.1998 FR 9803489
(43) Date de publication de la demande: 27.12.2000
(73) Titulaire: SOCIETE DES CERAMIQUES TECHNIQUES, 65460 Bazet (FR)
(72) Inventeur: SORIA, Raymond, F-65460 Bazet (FR); FOULON, Jean-Claude, F-65500 Saint Lezer (FR); CAYREY, Jean-Michel, F-65400 Beaucens (FR)
(74) Mandataire: Cabinet Hirsch
(86) Numéro de dépôt international: FR9900606
(87) Numéro de publication internationale: WO9948839

(56) Documents cités:
- EP-A- 0 787 524
- EP-B- 0 609 275
- US-A- 5 607 586

## Description

La présente invention a pour objet un nouveau type de membrane céramique apparentée aux (micro)fibres pour la microfiltration et l'ultrafiltration de fluides et pour la filtration et la séparation des gaz, ainsi qu'un procédé de fabrication de cette membrane.

Des membranes de géométrie (micro)fibres, c'est à dire de géométrie tubulaire avec un diamètre externe pouvant atteindre 3 mm et un diamètre interne compris entre 400 et 2000 µm sont déjà connues et commercialisées. Elles sont en matériaux organiques et présentent à ce titre les avantages et inconvénients parfaitement connus de ces matériaux. Ainsi, si les caractéristiques mécaniques de ces (micro)fibres et en particulier leur souplesse permettent le montage en module de filtration, elles montrent une faible résistance chimique et thermique, qui limitent leur utilisation à une température inférieure à 70°C et dans un domaine de pH compris entre 4 et 10.

Par ailleurs des (micro)fibres céramiques ont déjà été proposées; dans tous les cas, ces (micro)fibres minérales reprennent la géométrie classique des fibres organiques.

EP-A-0787524 décrit des multi-canaux dont une partie correspond à des canaux primaires et l'autre partie correspond à des conduits de sortie. Ces conduits de sortie connectent les canaux primaires avec le côté perméat afin de réduire la pression interne.

EP-A-0609275 et US-P-5607586 décrivent des membranes ayant une géométrie particulière (épaisseur et rayon des parois spécifiques), ces membranes comprenant un support macroporeux et une couche filtrante.

WO-A-94/23829 décrit des fibres dont le diamètre extérieur peut atteindre 3 mm avec une épaisseur de paroi de l'ordre de 30 à 500 *µ*m, ainsi qu'un procédé de préparation par extrusion.

US-4446024 décrit aussi des fibres dont le diamètre extérieur est compris entre 640 et 3180 *µ*m (entre 0,025 et 0,125 inch). Ces fibres se caractérisent par des épaisseurs de paroi relativement faibles.

Par ailleurs, si les fibres céramiques sont utiles actuellement pour la filtration, c'est surtout du fait de leur homogénéité. Ainsi, ces fibres sont constituées d'un seul milieu poreux, qui sert à la fois de support (la fibre est auto-supportée) et de media filtrant, à la différence des systèmes classiques de plus grande taille, comprenant un support macroporeux revêtu d'une couche poreuse filtrante.

La géométrie actuelle des fibres céramiques a cependant pour conséquence une faible résistance mécanique de celles-ci. De plus, la fabrication et l'utilisation du module à fibres céramiques sont difficiles, les fibres pouvant se rompre pour différentes raisons telles que coup de bélier ou vibration des pompes.

Il existe donc un besoin pour des (micro)fibres qui soient résistantes et permettent un montage en module aisé.

La présente invention a donc pour objet une fibre céramique poreuse multicanal présentant un diamètre compris entre 2 et 10 mm; et dans laquelle
le rapport d'enveloppe Re correspondant au ratio du diamètre de la fibre céramique poreuse sur le diamètre du canal est tel que Re est compris entre 2,5 et 15; et
dans laquelle le rapport de soutien Rs correspondant au rapport entre l'épaisseur moyenne de paroi mesurée selon le rayon de la fibre sur le diamètre du canal traversé, ladite épaisseur moyenne correspondant à la moyenne de l'épaisseur des parois des canaux sis sur le rayon de la fibre passant par le nombre maximum de canaux, est tel que Rs est compris entre 0,3 et 2,5 et
dans laquelle le rapport d'épaisseur Rp correspondant au rapport des épaisseurs des parois des canaux sis sur le rayon de la fibre passant par le nombre maximum de canaux, est tel que Rp est compris entre 1/2 et 2; et
   dans laquelle le rang de canaux est 1 ou 2.

Cette fibre correspond à un barreau de céramique poreuse est percé de plusieurs canaux, ledit barreau en céramique poreuse présentant une structure poreuse (au sens classique du terme) et une porosité variable, et l'axe desdits canaux est parallèle à l'axe du barreau céramique.

Cette fibre est constituée d'un seul milieu poreux, qui sert à la fois de support (la fibre est auto-supportée) et de media filtrant. Les canaux traversant la fibre sont des canaux qui débouchent de chaque côté de la fibre; ces canaux sont non-communiquants avec le côté perméat, sauf par leur porosité. Tous ces canaux remplissent la même fonction (séparation, réaction, etc.); aucun de sert à transporter du perméat (ou le résultat du fluide ayant traversé la paroi d'un autre canal.

Selon un mode de réalisation, le rang de canaux est au maximum de 2, à savoir un canal central et des canaux disposés autour sensiblement selon un cercle. Le rang peut aussi être de 1 seulement, au quel cas les canaux sont disposés selon sensiblement un cercle.

Selon un mode de réalisation, les canaux sont distribués au sommet d'un polygone régulier dont l'ordre est compris entre 3 et 6; un canal supplémentaire pouvant occuper le centre dudit polygone dans le cas où l'ordre est supérieur à 3; de préférence l'ordre est 5 ou 6.

La fibre et/ou les canaux ont toutes formes appropriées, par exemple de section droite circulaire; des sections pour les canaux en forme de quartier d'orange sont possibles, de même que pour la fibre, une géométrie circulaire pourra être remplacée par une géométrie multilobale. Dans le cas de la géométrie à quartiers d'orange (ou dans le cas d'un canal qui ne serait pas circulaire), le diamètre d'un tel canal sera défini comme le diamètre d'un canal circulaire ayant la même section droite. Dans le cas où la fibre n'aurait pas une section circulaire, on définira de façon similaire le diamètre d'une telle fibre comme le diamètre d'une fibre circulaire ayant la même section droite.

La fibre et/ou les canaux sont de préférence de section droite circulaire.

De préférence encore, tous les canaux sont sensiblement identiques; on limitera ainsi au mieux les différences de perte de charge et de débit d'un canal à l'autre le long de la fibre.

Selon un mode de réalisation, la fibre selon l'invention présente les caractéristiques suivantes:
(i) le diamètre de chaque canal est compris entre 150 et 2000 *µ*m, de préférence entre 300 et 1000 *µ*m, et/ou
(ii) le rapport d'enveloppe Re correspondant au ratio du diamètre de la fibre céramique poreuse sur le diamètre du canal est tel que Re est compris de préférence entre 4 et 10, et/ou
(iii) le rapport d'occupation Ro correspondant au ratio de la somme des sections droites des canaux sur la section droite de la fibre céramique poreuse est tel que Ro est compris entre 0,03 et 0,45, de préférence entre 0,04 et 0,35, et avantageusement entre 0,15 et 0,35, et/ou
(iv) le rapport de soutien Rs correspondant au rapport entre l'épaisseur moyenne de paroi mesurée selon le rayon de la fibre sur le diamètre du canal traversé, ladite épaisseur moyenne correspondant à la moyenne de l'épaisseur des parois des canaux sis sur le rayon de la fibre passant par le nombre maximum de canaux, est tel que Rs est compris entre 0,3 et 2,5, de préférence entre 0,5 et 1,5, et/ou
(v) le rapport d'épaisseur Rp correspondant au rapport des épaisseurs des parois des canaux sis sur le rayon de la fibre passant par le nombre maximum de canaux, est tel que Rp est avantageusement d'environ 1. Selon un autre mode de réalisation, ce rapport est compris entre 2 et 3.

Le diamètre de la fibre est compris de préférence entre 3 et 7 mm.

Les fibres selon l'invention présentent une résistance à l'écrasement supérieure à la géométrie (micro)fibre classique. Ainsi, à surfaces de filtration égales et/ou débits de filtration égaux, on obtient les valeurs de résistance à la rupture suivantes: pour une fibre monocanal de 0,1 à 1 N, pour une fibre à 4 canaux de 25 à 35 N, pour une fibre à 7 canaux de 60 à 100 N.

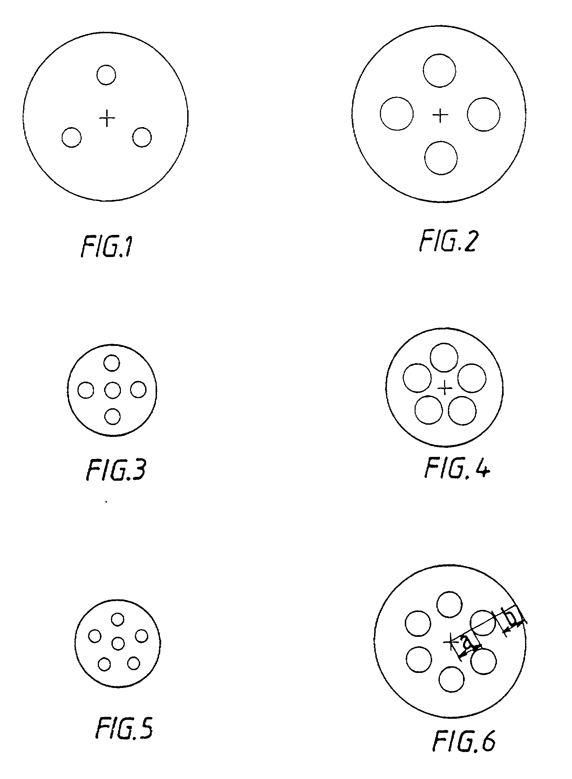

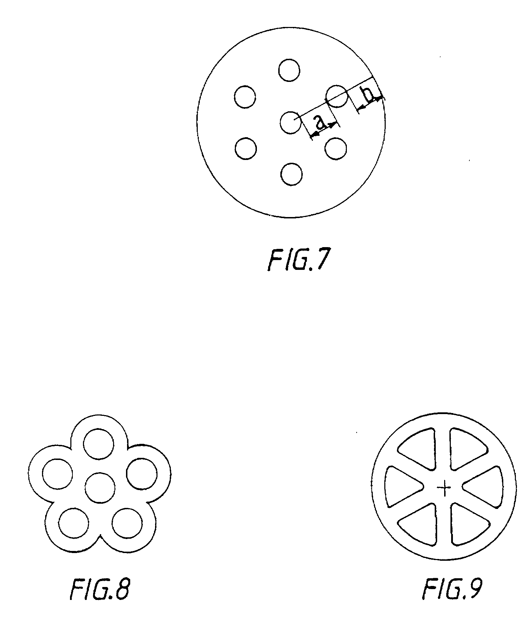

La géométrie et les paramètres sont explicités plus en détails en référence aux dessins, dans lesquels les figures 1 à 9 représentent des modes de réalisation particuliers. Les rapports des dimensions correspondent à la réalité; l'échelle est telle que le diamètre de la fibre objet de la figure 7 est de 4,5 mm. Sur les figures 6 et 7, on a reporté la mesure d'une épaisseur moyenne. Dans un premier temps, on prend en compte le rayon de la fibre passant par le nombre maximum de canaux; on détermine ensuite les longueurs "a" et "b", tel qu'indiquées, ces longueurs correspondant à l'épaisseur des parois des canaux sis sur ledit rayon de la fibre. On en prend la moyenne (a + b)/2, que l'on divise par le diamètre du canal traversé. On obtient ainsi le rapport Rs. Le rapport d'épaisseur Rp est égal à a/b; dans toutes les figures ce rapport Rp est de 1. Ce rapport d'épaisseur indique le placement radial des canaux (plus ou moins éloigné du centre de la fibre). Pour chaque mode de réalisation représenté par une figure, les valeurs des dimensions classiques sont reportées dans le tableau qui suit (dans la colonne "nbre canal", n + m signifie n canaux en périphérie et m canaux centraux, les diamètres des canaux et de la fibre, ainsi que l'épaisseur moyenne sont indiqués en mm, tandis que les sections droites des canaux et de la fibre sont indiqués en mm2).

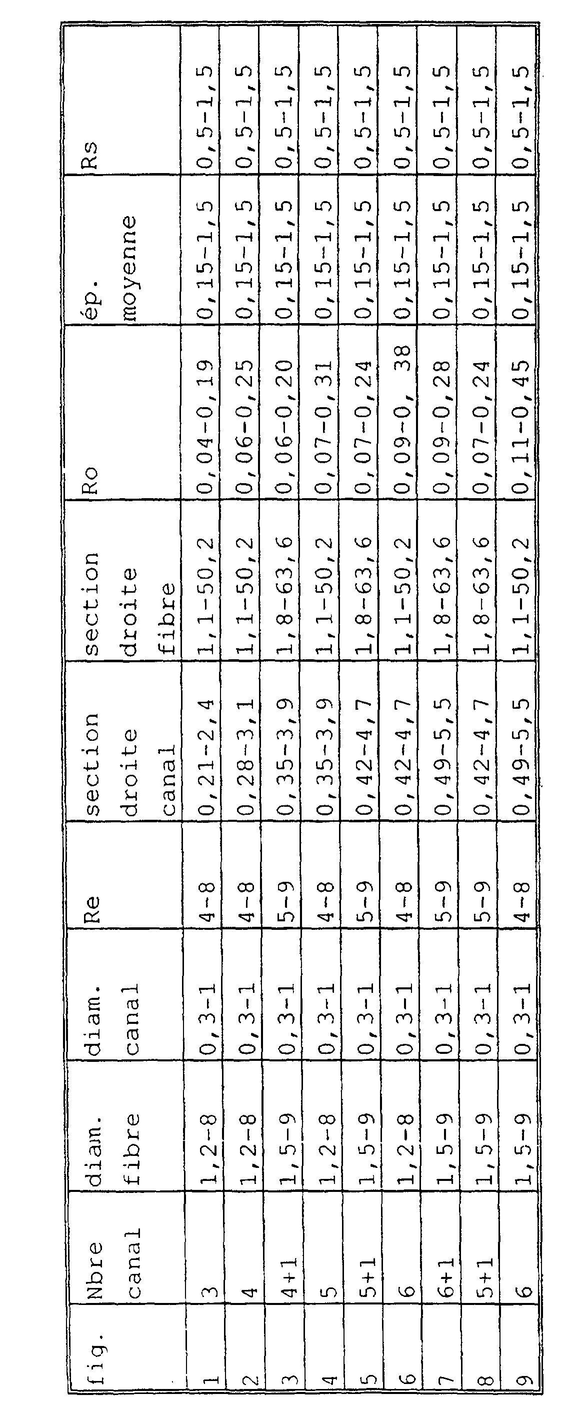

La fibre selon l'invention présente un diamètre de pore moyen en général inférieur à 4 µm, classiquement compris entre 50 nm et 2 µm, de préférence entre 0,2 et 1,2 µm.

La fibre selon l'invention présente une porosité moyenne comprise entre 10 et 70%, de préférence entre 35 et 60%.

Les fibres selon l'invention présente une longueur qui peut atteindre plusieurs mètres; classiquement la longueur d'une fibre est comprise entre 0,5 et 2 m.

Les fibres selon l'invention présentent en général une flèche (la déformation due au frittage) faible, par exemple inférieure à 0,3 %, de préférence inférieure à 0,15 %, plus avantageusement inférieure à 0,05 %. Une flèche faible favorisera le montage des fibres en module.

De préférence, la céramique est un oxyde métallique.

Les fibres selon l'invention peuvent être utilisées pour de nombreuses applications, telles quelles ou après modification.

Selon un mode de réalisation, la fibre est telle que ses pores sont occupés, au moins en partie, par une zéolithe, de préférence de type silicalite. De telles fibres avec leur zéolithe sont appropriées notamment pour la séparation de gaz. La zéolithe est formée in situ de façon classique par imprégnation d'une solution précurseur puis calcination.

Selon un autre mode de réalisation, la fibre est telle que ses pores sont occupés, au moins en partie, par un catalyseur. Le catalyseur est fixé de façon classique dans les pores de la fibre.

Selon encore un autre mode de réalisation, la fibre est telle que ses pores sont occupés, au moins en partie, par une bactérie, de préférence immobilisée. Les bactéries sont immobilisés de façon classique dans les pores de la fibre.

De telles fibres avec leur catalyseur ou bactérie sont appropriées notamment pour la mise en oeuvre d'une réaction chimique ou biologique. Par exemple, dans le cas d'une bactérie, la solution à traiter comprend un nutriment, cette solution traverse la fibre et on récupère les produits de réaction au niveau du perméat. Ce mode de réalisation permet de coupler confinement bactérien, réaction biologique et épuration des produits.

L'invention a encore pour objet un module de filtration et/ou de réaction comprenant des fibres selon l'invention.

Selon un mode de réalisation, le module comprend une partie des fibres qui est utilisée pour injecter du gaz réactionnel.

Ce montage des fibres (avec ou sans leur bactéries immobilisées) selon ce dernier mode de réalisation est avantageux, dans le cas notamment de réactions aérobie. En effet, dans certains cas, par exemple dans le cas du traitement de l'eau, les réactions sont de type aérobie, et nécessitent une aération permanente du milieu réactionnel. Les fibres selon l'invention peuvent être montées dans un module de façon que certaines d'entre elles, disposées selon une répartition choisie, soient utilisées pour injecter de l'air ou de l'oxygène: on obtient ainsi un milieu aéré, sensiblement homogène, parfaitement adapté aux réactions biologiques notamment aérobie. On peut ainsi supprimer les étapes de formation des boues; de plus les produits obtenus à l'issue de la réaction selon l'invention sont directement utilisables, par exemple en agriculture.

Le module selon l'invention peut dans certains cas être appelé Bio Réacteur à Membranes (BRM). Ce module peut fonctionner de plusieurs façons. Par exemple, le milieu réactionnel comprend le milieu bactérien; les fibres travaillent alors par extraction (on extrait le milieu purifié par le lumen des fibres). Ce module peut aussi fonctionner avec des bactéries immobilisées, le milieu recherché étant alors obtenu classiquement au niveau du perméat.

Les fibres selon l'invention pourraient aussi être utilisées pour former des dispersions, gaz/liquide, liquide/liquide (émulsions) ou autres.

L'invention a aussi pour objet un procédé de fabrication de ladite fibre. Ce procédé se caractérise par la succession de trois étapes principales :
(i) La préparation d'une pâte minérale comprenant une partie ou charge minérale, un liant et un solvant, avec éventuellement un défloculant et/ou un agent d'extrusion;
(ii) La mise en forme par extrusion de ladite pâte;
(iii) La consolidation de cette forme par frittage.

La partie minérale de ladite pâte comprend des particules d'un composé minéral qui formera après frittage le réseau poreux (homogène dans son volume). Le composé minéral, avantageusement métallique est soit un composé non-oxyde, soit un oxyde métallique. Dans le cas où il s'agit d'un dérivé non-oxyde on choisira un dérivé du silicium ou de l'aluminium et préférentiellement le carbure de silicium, le nitrure de silicium ou le nitrure d'aluminium. Dans le cas où le composé métallique est un oxyde on choisira parmi les oxydes d'aluminium, de silicium ou des métaux des groupes IVA (groupe du titane) ou VA (groupe du vanadium) et de préférence l'alumine, l'oxyde de zirconium ou l'oxyde de titane. Ces oxydes peuvent être utilisés seul ou en mélange. Le composé métallique présente par exemple un diamètre moyen de particule (mesuré au sédigraphe) entre 0.15 et 2 µm, et préférentiellement entre 0,15 et 0,6 µm. Sa teneur dans la pâte sera comprise entre 50 et 90 % massique, et de préférence entre 65 et 85 % massique.

Le liant organique conférera à la pâte les propriétés rhéologiques nécessaires à l'extrusion et les propriétés mécaniques nécessaires pour obtenir une bonne cohésion du produit après l'extrusion. Ledit liant organique est de préférence, mais pas obligatoirement, un polymère hydrosoluble. Le polymère présentera par exemple, pour une solution à 2% massique, une viscosité mesurée à 20°C comprise entre 4 et 10Pa/s. Ce polymère peut être choisi parmi les celluloses et leurs dérivés (HEC, CMC, HPC, HPMC, etc.), ou peut aussi être un acide polyacrylique, du polyéthylèneglycol, un alcool polyvinylique, etc.. On peut aussi utiliser en tant que liant un liant classiquement utilisé comme liant de compression (ou pressage), plutôt qu'un liant de filage, les termes «liant de compression (ou pressage)» et «liant de filage» ayant le sens classique connu de l'homme de l'art. Un liant préféré est cristallin, notamment une cellulose microcristalline, qui correspondra à tout ou partie du liant. La pâte contiendra par exemple entre 2 et 10 % massique de liant organique et préférentiellement entre 3 et 8 % massique.

Le solvant a pour rôle de disperser la partie minérale et le liant. Dans le cas où l'on utilise un polymère hydrosoluble, on choisira l'eau comme solvant; dans le cas ou le polymère n'est pas hydrosoluble on choisira un alcool par exemple l'éthanol comme solvant. La concentration du solvant sera comprise par exemple entre 8 et 40% massique et préférentiellement entre 10 et 27% massique.

Un défloculant soluble dans le solvant améliorera la dispersion des particules du composé métallique. On choisira par exemple un acide polyacrylique, un acide phospho-organique ou un alkyl-sulfonique. La teneur en défloculant est de l'ordre de 0,5 à 1 % massique.

Dans certains cas, on ajoutera un agent d'aide à l'extrusion tel qu'un polyéthyléneglycol. La teneur en agent d'extrusion est de l'ordre de 0.5 à 1 % massique.

L'invention a aussi pour objet la pâte précurseur de la fibre, ladite pâte comprenant, dispersée dans un solvant, une charge minérale et un liant, ce liant comprenant un liant de compression. Cette pâte est celle décrite ci-dessus.

La mise en forme est réalisée classiquement par extrusion. A l'aide d'une vis ou d'un piston, la pâte est poussée au travers d'une filière complexe afin de prendre sa géométrie. Les ébauches de membranes sont recueillies au sortir de la filière, séchées à l'air libre afin d'éliminer l'eau ou le solvant, puis frittées à une température comprise entre 1300 et 1700°C pendant par exemple deux heures. Ce frittage se fait sous une atmosphère normale ou neutre (par exemple d'argon) dans le cas de pâte à base d'oxyde métallique, et sous atmosphère neutre (par exemple d'argon ou d'hélium) dans le cas où le composé métallique est un non-oxyde.

Le dispositif d'extrusion est un dispositif classique, à savoir il comprend une filière, avec disposée au centre de celle-ci une couronne supportant les pions qui formeront les canaux.

Les ébauches de fibres obtenues à la sortie du dispositif d'extrusion peuvent être séchées et/ou frittées dans des barillets tournants, par exemple selon la technique décrite dans le brevet FR-A-2229313 au nom de Ceraver.

Les exemples suivants illustrent l'invention sans la limiter. (Le rapport d'épaisseur Rp est de 1 dans ces exemples).

### Exemple 1:

On réalise une pâte céramique par mélange d'une alumine de taille moyenne 0,6 µm, une cellulose microcristalline comme liant organique et de l'eau comme phase solvant. La concentration de la pâte est (en pourcentage massique) :

| | |
|---|---|
| alumine | 77 |
| cellulose microcristalline | 5 |
| eau | 18. |

La pâte est extrudée à l'aide d'une presse à piston. Après, séchage à 50°C en rotation et cuisson à 1450°C pendant 2 heures en atmosphère normale on obtient une fibre poreuse présentant une structure homogène dans son volume, présentant un diamètre de pore de 0,3 µm et une porosité de 23%. Fibre et canaux présentent une section droite circulaire. Les canaux sont disposés au sommet d'un polygone d'ordre 6 avec un canal au centre de la fibre. Le diamètre des canaux est de 500 µm, et le diamètre de la fibre de 4,5 mm. Le rapport d'enveloppe est donc de 9. L'épaisseur moyenne de la paroi entre canal est mesurée suivant le rayon de la fibre qui passe par le centre de deux canaux. Cette épaisseur moyenne est de 0,75 mm. Le rapport de soutien est de 1,5. La surface de la section droite de la fibre est de 15,90 mm2, la surface totale des sections droites des canaux est de 1,37 mm2. Le rapport d'occupation est donc égal à 0,086.

La flèche de cette fibre est mesurée pour une longueur de 1 mètre, elle est de 0,5 mm. La résistance mécanique est mesurée par flexion quatre points avec 50 mm de distance entre les deux points d'appui. La valeur obtenue pour la fibre est de 100 N.

On imprègne la porosité de cette fibre à l'aide d'une solution aqueuse de silice et d'hydroxyde de tétrapropyl ammonium à pH 12. La fibre imprégnée est placée dans un autoclave dont la température est portée à 200°C pendant 72 heures. Après synthèse, on obtient une zéolithe de type silicalite ayant cristallisé à l'intérieur des pores de la fibre poreuse. Cette structure possède alors des propriétés de séparation de gaz. Ainsi lorsque l'on alimente à la température ambiante la fibre avec un mélange d'hydrogène et de méthane de composition molaire 1 pour 1 on obtient un perméat enrichi en méthane dont la composition molaire est de 7 moles d'hydrogène pour 93 moles de méthane soit une sélectivité de 13.

### Exemple 2:

On réalise une pâte céramique par mélange d'une zircone de taille moyenne 0,15 µm, une hydroxypropylcellulose comme liant organique et de l'eau comme phase solvant. La concentration de la pâte est (en pourcentage massique):

| | |
|---|---|
| zircone | 50 |
| hydroxypropylcellulose | 10 |
| eau | 40 |

La pâte est extrudée à l'aide d'une presse à piston. Après séchage à 30°C et cuisson à 1500°C pendant 2 heures en atmosphère normale on obtient une fibre poreuse présentant une structure homogène dans son volume, et présentant un diamètre de pore de 0,1 µm et une porosité de 18%. Fibre et canaux présentent une section droite circulaire. Les canaux sont disposés au sommet d'un polygone d'ordre 4 avec un canal au centre de la fibre. Le diamètre des canaux est de 400 µm, et le diamètre de la fibre de 2,16 mm. Le rapport d'enveloppe est donc de 5,4. L'épaisseur moyenne de la paroi entre canal est mesurée suivant le rayon de la fibre qui passe par le centre de deux canaux. Cette épaisseur moyenne est de 0,24 mm. Le rapport de soutien est de 0,6. La surface de la section droite de la fibre est de 3,66 mm2, la surface totale des sections droites des canaux est de 0,67 mm2. Le rapport d'occupation est donc égal à 0,171.

La flèche de cette fibre est mesurée pour une longueur de 1 mètre, elle est de 0,8 mm. La résistance mécanique est mesurée par flexion quatre points avec 50 mm de distance entre les deux points d'appui. La valeur obtenue pour la fibre est de 60 N.

### Exemple 3:

On réalise une pâte céramique par mélange d'une poudre d'oxyde de titane de taille moyenne 2 µm, une cellulose microcristalline comme liant organique et de l'eau comme phase solvant. On ajoute à ce mélange un acide phospho-organique tel que du WITCO PS65 comme défloculant. La concentration de la pâte est (en pourcentage massique) :

| | |
|---|---|
| Oxyde de titane | 70 |
| cellulose microcristalline | 3 |
| eau | 26,5 |
| WITCO PS65 | 0,5 |

La pâte est mise en forme à l'aide d'une extrudeuse à vis. Après séchage à la température ambiante et cuisson à 1300°C pendant 3 heures en atmosphère d'argon on obtient une fibre poreuse présentant une structure homogène dans son volume et présentant un diamètre de pore de 1,3 *µ*m et une porosité de 30%. Fibre et canaux présentent une section droite circulaire. Les canaux sont disposés au sommet d'un polygone d'ordre 5 avec un canal au centre de la fibre. Le diamètre des canaux est de 300 µm, et le diamètre de la fibre de 2,1 mm. Le rapport d'enveloppe est donc de 7. L'épaisseur moyenne de la paroi entre canal est mesurée suivant le rayon de la fibre qui passe par le centre de deux canaux. Cette épaisseur moyenne est de 0,3 mm. Le rapport de soutien est de 1,0. La surface de la section droite de la fibre est de 3,46 mm2, la surface totale des sections droites des canaux est de 0,42 mm2. Le rapport d'occupation est donc égal à 0,122.

La flèche de cette fibre est mesurée pour une longueur de 2 mètres, elle est de 0,6 mm. La résistance mécanique est mesurée par flexion quatre points avec 50 mm de distance entre les deux points d'appui. La valeur obtenue pour la fibre est de 83 N.

On immobilise dans la porosité de la fibre des bactéries. Ces bactéries sont alimentées par les canaux intérieurs à l'aide d'une solution de nutriment qu'elles transforment. Les produits de réactions sont récupérés dans le perméat.

### Exemple 4:

On réalise une pâte céramique par mélange de silice de taille moyenne 0,4 µm, un alcool polyvinylique comme liant organique et de l'eau comme phase solvant. La pâte comporte de plus du PEG 4000 comme plastifiant. La concentration de la pâte est (en pourcentage massique):

| | |
|---|---|
| silice | 65, |
| alcool polyvinylique | 9 |
| eau | 25 |
| PEG 4000 | 1 |

La pâte est extrudée à l'aide d'une presse à piston. Après séchage à 30°C dans un barillet maintenu en rotation, et cuisson à 1430°C pendant 5 heures en atmosphère normale on obtient une fibre poreuse présentant une structure homogène dans son volume et présentant un diamètre de pore de 0,3 µm et une porosité de 20%. Fibre et canaux présentent une section droite circulaire. Les canaux sont disposés au sommet d'un polygone d'ordre 5 sans canal au centre de la fibre. Le diamètre des canaux est de 700µm, et le diamètre de la fibre de 2,8 mm. Le rapport d'enveloppe est donc de 4. L'épaisseur moyenne de la paroi entre canal est mesurée suivant le rayon de la fibre qui passe par le centre d'un canal. Cette épaisseur moyenne est de 0,35 mm. Le rapport de soutien est de 0,5. La surface de la section droite de la fibre est de 6,16 mm2, la surface totale des sections droites des canaux est de 1,92 mm2. Le rapport d'occupation est donc égal à 0,313.

La flèche de cette fibre est mesurée pour une longueur de 1 mètre, elle est de 0,2 mm. La résistance mécanique est mesurée par flexion quatre points avec 50 mm de distance entre les deux points d'appui. La valeur obtenue pour la fibre est de 65 N.

### Exemple 5:

On réalise une pâte céramique par mélange d'un oxyde de vanadium de taille moyenne 1,7 µm, un acide polyacrylique comme liant organique et de l'eau comme phase solvant. La concentration de la pâte est (en pourcentage massique):

| | |
|---|---|
| Oxyde de vanadium | 83 |
| Acide polyacrylique | 5 |
| eau | 12 |

La pâte est mise en forme à l'aide d'une presse à piston. Après séchage à 50°C et cuisson à 1600°C pendant 2 heures en atmosphère normale on obtient une fibre poreuse présentant une structure homogène dans son volume et présentant un diamètre de pore de 1,1 µm et une porosité de 26%. Fibre et canaux présentent une section droite circulaire. Les canaux sont disposés au sommet d'un polygone d'ordre 6 sans canal au centre de la fibre. Le diamètre des canaux est de 300 µm, et le diamètre de la fibre de 1,8 mm. Le rapport d'enveloppe est donc de 6. L'épaisseur moyenne de la paroi entre canal est mesurée suivant le rayon de la fibre qui passe par le centre d'un canal. Cette épaisseur moyenne est de 0,3 mm. Le rapport de soutien est de 1. La surface de la section droite de la fibre est de 2,54 mm2, la surface totale des sections droites des canaux est de 0,42 mm2. Le rapport d'occupation est donc égal à 0,167.

La flèche de cette fibre est mesurée pour une longueur de 1 mètre, elle est de 0,9 mm. La résistance mécanique est mesurée par flexion quatre points avec 50 mm de distance entre les deux points d'appui. La valeur obtenue pour la fibre est de 72 N.

### Exemple 6:

On réalise une pâte céramique par mélange d'une poudre de carbure de silicium de taille moyenne 1 µm, une éthyle cellulose comme liant organique et de l'éthanol comme phase solvant. La concentration de la pâte est (en pourcentage massique):

| | |
|---|---|
| Carbure de silicium | 90 |
| Ethyle cellulose | 2 |
| éthanol | 8 |

La pâte est mise en forme à l'aide d'une extrudeuse à vis. Après séchage à température ambiante et cuisson à 1700°C pendant 3 heures en atmosphère d'argon on obtient une fibre poreuse présentant une structure homogène dans son volume et présentant un diamètre de pore de 0,7 µm et une porosité de 25%. Fibre et canaux présentent une section droite circulaire. Les canaux sont disposés au sommet d'un polygone d'ordre 4 sans canal au centre de la fibre. Le diamètre des canaux est de 800 µm, et le diamètre de la fibre de 4,16 mm. Le rapport d'enveloppe est done de 5,2. L'épaisseur moyenne de la paroi entre canal est mesurée suivant le rayon de la fibre qui passe par le centre d'un canal. Cette épaisseur moyenne est de 0,64 mm. Le rapport de soutien est de 0,8. La surface de la section droite de la fibre est de 13,59 mm2, la surface totale des sections droites des canaux est de 2,01 mm2. Le rapport d'occupation est donc égal à 0,148.

La flèche de cette fibre est mesurée pour une longueur de 1 mètre, elle est de 0,4 mm. La résistance mécanique est mesurée par flexion quatre points avec 50 mm de distance entre les deux points d'appui. La valeur obtenue pour la fibre est de 35N.

Un réacteur biologique à membrane est construit avec ces fibres. Pour cela on réalise une cartouche de section rectangulaire de façon à obtenir 5 rangs de 200 fibres en immobilisant les extrémités des fibres dans une résine de type époxy. L'une des deux extrémités de cette cartouche est totalement fermé. L'autre extrémité est équipée d'un dispositif permettant d'une part la récupération de liquide provenant des canaux et d'autre part l'injection d'air à l'intérieur des canaux. La proportion des fibres de récupération de liquide et des fibres d'injection de gaz est de 20 pour 1. Cette cartouche est placée dans un réservoir contenant des effluents à purifier et des bactéries, ce réservoir est alimenté en continu. Les fibres récupératrices permettent l'extraction en continu du liquide et cela à un taux équivalent à l'alimentation du bac. Les fibres d'injection créent d'un nuage de bulle d'air dans le réservoir permettant d'une part le nettoyage des fibres de récupération et d'autre part le maintien des conditions optimales pour la flore bactérienne.

### Exemple 7:

On réalise une pâte céramique par mélange d'une poudre de nitrure d'alumine de taille moyenne 0,6 µm, une éthyle cellulose comme liant organique et de l'éthanol comme phase solvant. La concentration de la pâte est (en pourcentage massique):

| | |
|---|---|
| Nitrure d'alumine | 85 |
| Ethyle cellulose | 5 |
| éthanol | 10 |

La pâte est extrudée à l'aide d'une presse à piston. Après séchage à 50 °C et cuisson à 1300°C pendant 2 heures en atmosphère normale on obtient une fibre poreuse présentant une structure homogène dans son volume et présentant un diamètre de pore de 0,5 µm et une porosité de 22%. Fibre et canaux présentent une section droite circulaire. Les canaux sont disposés au sommet d'un polygone d'ordre 4 avec un canal au centre de la fibre. Le diamètre des canaux est de 700 µm, et le diamètre de la fibre de 3,5 mm. Le rapport d'enveloppe est donc de 5. L'épaisseur moyenne de la paroi entre canal est mesurée suivant le rayon de la fibre qui passe par le centre d'un canal. Cette épaisseur moyenne est de 0,35 mm. Le rapport de soutien est de 0,5. La surface de la section droite de la fibre est de 9,62 mm2, la surface totale des sections droites des canaux est de 1,92 mm2. Le rapport d'occupation est donc égal à 0,2.

La flèche de cette fibre est mesurée pour une longueur de 1 mètre, elle est de 0,2 mm. La résistance mécanique est mesurée par flexion quatre points avec 50 mm de distance entre les deux points d'appui. La valeur obtenue pour la fibre est de 57,5 N.

### Exemple 8:

On réalise une pâte céramique par mélange d'une poudre de nitrure de silicium de taille moyenne 0,8 µm, une carboxy méthyle cellulose comme liant organique et de l'eau comme phase solvant. La concentration de la pâte est (en pourcentage massique):

| | |
|---|---|
| Nitrure de silicium | 65 |
| Carboxy méthyle cellulose | 6 |
| eau | 32 |

La pâte est extrudée à l'aide d'une presse à piston. Après séchage à 30°C et cuisson à 1500°C pendant 4 heures en atmosphère normale on obtient une fibre poreuse présentant une structure homogène dans son volume et présentant un diamètre de pore de 0,4 µm et une porosité de 20%. Fibre et canaux présentent une section droite circulaire. Les canaux sont disposés au sommet d'un polygone d'ordre 3 sans canal au centre de la fibre. Le diamètre des canaux est de 1000 µm, et le diamètre de la fibre de 8 mm. Le rapport d'enveloppe est donc de 8. L'épaisseur moyenne de la paroi entre canal est mesurée suivant le rayon de la fibre qui passe par le centre d'un canal. Cette épaisseur moyenne est de 1,5 mm. Le rapport de soutien est de 1,5. La surface de la section droite de la fibre est de 50,27 mm2, la surface totale des sections droites des canaux est de 2,36 mm2. Le rapport d'occupation est donc égal à 0,047.

La flèche de cette fibre est mesurée pour une longueur de 1 mètre, elle est de 1 mm. La résistance mécanique est mesurée par flexion quatre points avec 50 mm de distance entre les deux points d'appui. La valeur obtenue pour la fibre est de 25 N.

### Exemple 9:

On reprend la pâte décrite dans l'exemple 1. Le séchage et la cuisson sont réalisés dans les mêmes conditions. On obtient une fibre poreuse présentant une structure homogène dans son volume et présentant un diamètre de pore de 0,3 µm et une porosité de 23%. La fibre présente un section droite multilobée, et les canaux une section droite circulaire. Les canaux sont disposés au sommet d'un polygone d'ordre 5 avec un canal au centre de la fibre. Le diamètre des canaux est de 700 µm, et le diamètre de la fibre de 3,2 mm. Le rapport d'enveloppe est donc de 4,6. L'épaisseur moyenne de la paroi entre canal est mesurée suivant le rayon de la fibre qui passe par le centre d'un canal. Cette épaisseur moyenne est de 0,35 mm. Le rapport de soutien est de 0,5. La surface de la section droite de la fibre est de 7,82 mm2, la surface totale des sections droites des canaux est de 2,31 mm2. Le rapport d'occupation est donc égal à 0,295.

La flèche de cette fibre est mesurée pour une longueur de 1 mètre, elle est de 0,3 mm. La résistance mécanique est mesurée par flexion quatre points avec 50 mm de distance entre les deux points d'appui. La valeur obtenue pour la fibre est de 95 N.

### Exemple 10:

On reprend la pâte décrite dans l'exemple 3. Le séchage et la cuisson sont réalisés dans les mêmes conditions. On obtient une fibre poreuse présentant une structure homogène dans son volume et présentant un diamètre de pore de 1,3 µm et une porosité de 30%. La fibre présente un section droite circulaire, et les canaux une section droite en forme de quartier d'orange. Les canaux sont disposés au sommet d'un polygone d'ordre 6 sans canal au centre de la fibre. Le diamètre équivalent des canaux est de 800 µm, et le diamètre de la fibre de 3,6 mm. Le rapport d'enveloppe est donc de 4,5. L'épaisseur moyenne de la paroi entre canal est mesurée suivant le rayon de la fibre qui passe par le centre d'un canal. Cette épaisseur moyenne est de 0,4 mm. Le rapport de soutien est de 0,5. La surface de la section droite de la fibre est de 9,62 mm2, la surface totale des sections droites des canaux est de 3,46 mm2. Le rapport d'occupation est donc égal à 0,36.

La flèche de cette fibre est mesurée pour une longueur de 1 mètre, elle est de 0,3 mm. La résistance mécanique est mesurée par flexion quatre points avec 50 mm de distance entre les deux points d'appui. La valeur obtenue pour la fibre est de 73 N.

L'invention n'est pas limitée aux modes de réalisation décrits mais est susceptible de nombreuses variantes aisément accessibles à l'homme de l'art.

## Revendications

1. Fibre céramique poreuse multicanal;
présentant un diamètre compris entre 2 et 10 mm; et
dans laquelle le rapport d'enveloppe Re correspondant au ratio du diamètre de la fibre céramique poreuse sur le diamètre du canal est tel que Re est compris entre 2,5 et 15; et
dans laquelle le rapport de soutien Rs correspondant au rapport entre l'épaisseur moyenne de paroi mesurée selon le rayon de la fibre sur le diamètre du canal traversé, ladite épaisseur moyenne correspondant à la moyenne de l'épaisseur des parois des canaux sis sur le rayon de la fibre passant par le nombre maximum de canaux, est tel que Rs est compris entre 0,3 et 2,5; et
dans laquelle le rapport d'épaisseur Rp correspondant au rapport des épaisseurs des parois des canaux sis sur le rayon de la fibre passant par le nombre maximum de canaux, est tel que Rp est compris entre 1/2 et 2; et
dans laquelle le rang de canaux est 1 ou 2.

2. Fibre selon la revendication 1, dans laquelle les canaux sont distribués au sommet d'un polygone régulier dont l'ordre est compris entre 3 et 6, un canal supplémentaire pouvant occuper le centre dudit polygone dans le cas où l'ordre est supérieur à 3.

3. Fibre selon la revendication 2, dans laquelle l'ordre est de préférence 5 ou 6.

4. Fibre selon l'une quelconque des revendications 1 à 3, dans laquelle le diamètre du canal ou des canaux est compris entre 150 et 2000 µm.

5. Fibre selon la revendication 4, dans laquelle le diamètre du canal ou des canaux est compris entre 300 et 1000 *µ*m.

6. Fibre selon l'une quelconque des revendications 1 à 5, dans laquelle le rapport d'enveloppe Re est compris entre 4 et 10.

7. Fibre selon l'une quelconque des revendications 1 à 6, dans laquelle le rapport d'occupation Ro correspondant au ratio de la somme des sections droites des canaux sur la section droite de la fibre céramique poreuse est tel que Ro est compris entre 0,03 et 0,45.

8. Fibre selon la revendication 7, dans laquelle le rapport d'occupation Ro est compris entre 0,04 et 0,35.

9. Fibre selon la revendication 7 ou 8, dans laquelle le rapport d'occupation Ro est compris entre 0,15 et 0,35.

10. Fibre selon l'une quelconque des revendications 1 à 9, dans laquelle le rapport de soutien Rs est compris entre 0,5 et 1,5.

11. Fibre selon l'une quelconque des revendications 1 à 10, dans laquelle le rapport d'épaisseur Rp est d'environ 1.

12. Fibre selon l'une quelconque des revendications 1 à 11, présentant un diamètre compris entre 3 et 7 mm.

13. Fibre selon l'une quelconque des revendications 1 à 12, présentant un diamètre de pore moyen compris entre 50 nm et 2 µm.

14. Fibre selon la revendication 13, présentant un diamètre de pore moyen compris entre 0,2 et 1, 2 *µ*m.

15. Fibre selon l'une quelconque des revendications 1 à 14, présentant une porosité moyenne comprise entre 10 et 70%.

16. Fibre selon la revendication 15, présentant une porosité moyenne comprise entre 35 et 60%.

17. Fibre selon l'une quelconque des revendications 1 à 16, présentant une flèche inférieure à 0,3 %.

18. Fibre selon la revendication 17, présentant une flèche inférieure à 0,15 %.

19. Fibre selon la revendication 17 ou 18, présentant une flèche inférieure à 0,05 %.

20. Fibre selon l'une quelconque ces revendications 1 à 19, dans laquelle la fibre et/ou les canaux sont de section droite circulaire.

21. Fibre selon l'une quelconque ces revendications 1 à 20, dans laquelle tous les canaux sont sensiblement identiques.

22. Fibre selon l'une quelconque des revendications 1 à 21, dont la céramique est un oxyde métallique.

23. Fibre selon l'une quelconque des revendications 1 à 22, dont les pores sont occupés, au moins en partie, par une zéolithe.

24. Fibre selon la revendication 23, dans laquelle la zéolithe est de type silicalite.

25. Fibre selon l'une quelconque des revendications 1 à 22, dont les pores sont occupés, au moins en partie, par un catalyseur.

26. Fibre selon l'une quelconque des revendications 1 à 22, dont les pores sont occupés, au moins en partie, par une bactérie.

27. Fibre selon la revendication 26, dans laquelle la bactérie est immobilisée.

28. Module de filtration et/ou de réaction comprenant des fibres selon l'une quelconque des revendications 1 à 27.

29. Module de filtration et/ou de réaction selon la revendication 28, dans lequel une partie des fibres est utilisée pour injecter du gaz réactionnel.

30. Procédé de préparation d'une fibre selon l'une quelconque des revendications 1 à 22, comprenant les trois étapes principales suivantes:
(i) La préparation d'une pâte minérale comprenant une partie ou charge minérale, un liant et un solvant, avec éventuellement un défloculant et/ou un agent d'extrusion;
(ii) La mise en forme par extrusion de ladite pâte;
(iii) La consolidation de cette forme par frittage.

31. Pâte précurseur de la fibre selon l'une quelconque des revendications 1 à 22, ladite pâte comprenant, dispersée dans un solvant, une charge minérale et un liant, ce liant comprenant un liant de compression.

## Claims

1. A multi-channel porous ceramic fiber having a diameter comprised between 2 and 10 mm ; in which an envelope ratio Re corresponding to the ratio of porous ceramic fiber diameter to channel diameter is such that Re is comprised between 2.5 and 15, and
in which a sustain ratio Rs corresponding to a ratio between mean wall thickness measured along the radius of a fiber and the diameter of a channel passed through, said mean thickness corresponding to the mean of channel wall thickness located on a radius of said fiber passing through a maximum number of channels, is such that Rs is comprised between 0.3 and 2.5, and
in which a thickness ratio Rp corresponding to the ratio between channel wall thicknesses along a radius of the fiber passing through a maximum number of channels, is such that Rp is comprised between 1/2 and 2 ; and in which the rank of the channels is 1 or 2.

2. The fiber according to claim 1, in which the channels are distributed at the vertices of a regular polygon the order of which is comprised between 3 and 6, a supplementary channel being able to occupy the center of the said polygon where the order is greater than 3.

3. The fiber according to claim 2, in which the order is preferably 5 or 6.

4. The fiber according to any one of claims 1 to 3, in which the channel diameter is comprised between 150 and 2000 µm.

5. The fiber according to claim 4, in which the channel diameter is comprised between 300 and 1,000 µm.

6. The fiber according to any one of claims 1 to 5, in which envelope ratio Re is comprised between 4 and 10.

7. The fiber according to any one of claims 1 to 6, in which a fill ratio Ro corresponding to a ratio of the sum of channel cross-sections to porous ceramic fiber cross-section is such that Ro is comprised between the 0.03 and 0.45.

8. The fiber according to claim 7, in which fill ratio Ro is comprised between 0.04 and 0.35.

9. The fiber according to claim 7 or 8, in which fill ratio Ro is comprised between 0.15 and 0.35.

10. The fiber according to any one of claims 1 to 9, in which the sustain ratio Rs is comprised between 0.5 at 1.5.

11. The fiber according to any one of claims 1 to 10, in which thickness ratio Rp is about 1.

12. The fiber according to any one of claims 1 to 11, having a diameter comprised between 3 and 7 mm.

13. The fiber according to any one of claims 1 to 12, having a mean pore diameter comprised between 50 nm and 2 µm.

14. The fiber according to claim 13, having a mean pore diameter comprised between 0.2 at 1.2 µm.

15. The fiber according to any one of claims 1 to 14, having a mean porosity comprised between 10 and 70 %.

16. The fiber according to claim 15, having a mean porosity comprised between 35 and 60%.

17. The fiber according to any one of claims 1 to 16, that is out of true by less than 0.3 %.

18. The fiber according to claim 17, that is out of true by less than 0.15 %.

19. The fiber according to claim 17 or 18, that is out of true by less than a 0.05 %.

20. The fiber according to any one of claims 1 to 19, in which said fiber and/or said channels have a circular cross-section.

21. The fiber according to any one of claims 1 to 20, in which all said channels are substantially identical.

22. The fiber according to any one of claims 1 to 21, in which said ceramic is a metallic oxide.

23. The fiber according to any one of claims 1 to 22, in which the pores are occupied, at least partly, by a zeolite.

24. The fiber according to claim 23, in which said zeolite is of the silicalite type.

25. The fiber according to any one of claims 1 to 22, in which the pores are occupied, at least in part, by a catalyst.

26. The fiber according to any one of claims 1 to 22, the pores of which are occupied, at least in part, by a bacteria.

27. The fiber according to claim 26, in which said bacteria is immobilized.

28. A filtration and/or reaction module comprising fibers according to any one of claims 1 to 27.

29. The filtration and/or reaction module according to claim 28, in which a part of said fibers is employed for injecting a reactional gas.

30. A method for preparing a fiber according to any one of claims 1 to 22, comprising the following three main steps:
(i) preparing an inorganic paste constituted by an inorganic portion or filler, a binder and a solvent, with, optionally, a deflocculating agent and/or an extrusion agent;
(ii) shaping said paste by extrusion;
(iii) consolidating the shape by sintering.

31. A precursor paste for the fiber according to any one of claims 1 to 22, said paste comprising, dispersed in a solvent, an inorganic filler and a binder, said binder comprising a compression binder.

## Patentansprüche

1. Poröse Multikanal-Keramikfiber mit einen Durchmesser zwischen 2 und 100 mm, in welcher das Umfangsverhältnis, entsprechend dem Verhältnis zwischen dem Durchmesser der porösen Keramikfiber und dem Kanaldurchmesser Re, derart ist, dass Re einen Wert zwischen 2,5 und 15 annimmt ; und in welcher das Stützverhältnis Rs, entsprechend dem Verhältnis zwischen der mittleren Wandstärke, gemessen entlang dem Fiberradius, und dem Durchmesser des gekreuzten Kanals, wobei die mittlere Stärke dem Mittel der Wandstärken der auf dem ein Maximum von Kanälen aufweisenden Fiberradius befindlichen Kanäle entspricht, derart ist, dass Rs einen Wert zwischen 0,3 und 2,5 annimmt ; und in welcher das Stärkenverhältnis Rp, das dem Verhältnis zwischen den Wandstärken der auf dem ein Maximum von Kanälen aufweisenden Fiberradius befindlichen Kanäle entspricht, derart ist, dass Rp zwischen ½ und 2 liegt; und in welcher der Kanalrang 1 oder 2 ist.

2. Fiber gemäß Anspruch 1, in welcher die Kanäle auf dem Scheitelpunkt eines regelmäßigen Polygons, der Ordnung 3 bis 6 angeordnet sind und ein zusätzlicher Kanal das Zentrum dieses Polygons belegen kann im Falle dass die Ordnung größer als 3 ist.

3. Fiber gemäß Anspruch 2, in welcher die Ordnung vorzugsweise 5 oder 6 ist.

4. Fiber gemäß mindestens einem der Ansprüche 1 bis 3, in welcher der Durchmesser des Kanals oder der Kanäle zwischen 150 und 2000 µm liegt.

5. Fiber gemäß Anspruch 4, in welcher der Durchmesser des Kanals oder der Kanäle zwwischen300 und 1000 µm liegt.

6. Fiber gemäß mindestens einem der Ansprüche 1 bis 5, in welcher das Umfangsverhältnis Re zwischen 4 und 10 liegt.

7. Fiber gemäß mindestens einem der Ansprüche 1 bis 6, in welcher das Belegungsverhältnis Ro, entsprechend dem Verhältnis zwischen der Summe der Querschnitte der Kanäle und des Querschnittes der porösen Keramikfiber derart ist, dass Ro zwischen 0,03 und 0,45 liegt.

8. Fiber gemäß Anspruch 7, in welcher das Belegungsverhältnis Ro zwischen 0,04 und 0,35 liegt.

9. Fiber gemäß Anspruch 7 oder 8, in welcher das Belegungsverhältnis Ro zwischen 0,15 und 0,35 liegt.

10. Fiber gemäß mindestens einem der Ansprüche 1 bis 9, in welcher das Stützverhältnis Rs zwischen 0,5 und 1,5 liegt.

11. Fiber gemäß mindestens einem der Ansprüche 1 bis 10, in welcher das Stärkenverhältnis Rp ungefähr 1 ist.

12. Fiber gemäß mindestens einem der Ansprüche 1 bis 11, mit einem Durchmesser zwischen 3 und 7 mm.

13. Fiber gemäß mindestens einem der Ansprüche 1 bis 12, mit einem mittleren Porendurchmesser zwischen 50nm und 2µm.

14. Fiber gemäß Anspruch 13, mit einem mittleren Porendurchmesser zwischen 0,2 und 1,2µm.

15. Fiber gemäß mindestens einem der Ansprüche 1 bis 14, mit einem mittleren Porosität zwischen 10 und 70%.

16. Fiber gemäß Anspruch 15, mit einem mittleren Porendurchmesser zwischen 35 und 60%.

17. Fiber gemäß mindestens einem der Ansprüche 1 bis 16, mit einem Durchhang von weniger als 0,3%.

18. Fiber gemäß Anspruch 17, mit einem Durchhang von weniger als 0,15%.

19. Fiber gemäß Anspruch 18, mit einem Durchhang von weniger als 0,05%.

20. Fiber gemäß mindestens einem der Ansprüche 1 bis 19, in welcher die Fiber und/oder die Kanäle einen kreisförmigen Querschnitt aufweisen.

21. Fiber gemäß mindestens einem der Ansprüche 1 bis 20, in welcher alle Kanäle im wesentlichen identisch sind.

22. Fiber gemäß mindestens einem der Ansprüche 1 bis 21, dessen Keramik ein Metalloxyd ist.

23. Fiber gemäß mindestens einem der Ansprüche 1 bis 22, dessen Poren mindestens teilweise von einem Zeolith belegt sind.

24. Fiber gemäß Anspruch 23, in welcher der Zeolith vom Typ Silikalit ist.

25. Fiber gemäß mindestens einem der Ansprüche 1 bis 22, dessen Poren mindestens teilweise von einem Katalysator belegt sind.

26. Fiber gemäß mindestens einem der Ansprüche 1 bis 22, dessen Poren mindestens teilweise von einer Bakterie belegt sind.

27. Fiber gemäß Anspruch 26, in welcher die Bakterie immobilisiert ist.

28. Filtrations- und/oder Reaktionsmodul umfassend Fibern gemäß mindestens einem der Ansprüche 1 bis 27.

29. Filtrations- und/oder Reaktionsmodul gemäß Anspruch 28, in welchem ein Teil der Fibern für das Einblasen von Gas verwendet wird.

30. Verfahren zur Herstellung eine Fiber gemäß mindestens einem der Ansprüche 1 bis 22, umfassend die drei folgenden Hauptstufen :
(i) die Zubereitung der mineralischen Masse umfassend einen Teil der mineralischen Füllstoffe, einen Binder und ein Lösungsmittel, gegebenenfalls mit einem Entflockungsmittel und/oder einem Extrusionsmittel;
(ii) die Formgebung mittels Extrusion der erhaltenen Masse;
(iii) die Konsolidierung der Form mittels Sintern.

31. Vorläufermasse der Fiber gemäß mindestens einem der Ansprüche 1 bis 22, wobei diese in einem Lösungsmittel dispergierte Masse einen mineralischen Füllstoff und einen Binder umfasst und dieser Binder einen Druckbinder umfasst.
